# EUROPEAN PATENT SPECIFICATION

(11) **EP 4 560 077 B1**
(45) Date of publication and mention of the grant of the patent: **01.04.2026**
(21) Application number: 24199889.7
(22) Date of filing: 12.09.2024
(51) Int. Cl.: E01H 5/09, B62D 11/04, B60L 3/10

(54) **SNOW THROWER**
SCHNEEFRÄSE
FRAISE À NEIGE

(30) Priority: 24.11.2023 CN 202311581145
(43) Date of publication of application: 28.05.2025
(73) Proprietor: Nanjing Chervon Industry Co., Ltd., Nanjing, Jiangsu 211106 (CN)
(72) Inventor: WANG, Peng, Nanjing (CN); GUO, Zengbing, Nanjing (CN); XUE, Jingkun, Nanjing (CN)
(74) Representative: Sun, Yiming

(56) References cited:
- JP-A- S6 393 910
- US-B1- 10 214 869

## Description

### TECHNICAL FIELD

The present invention relates to the technical field of snow throwers.

### BACKGROUND

As a push power tool, a snow thrower can be used as an important device for snow removal in winter and has major advantages such as high efficiency, cost-saving, and environmental protection. As the economy grows stronger and society continues progressing, the snow throwers are gradually promoted and used at home and abroad.

When the snow thrower is in use, if the road surface is icy and slippery or there is a large snow pile, the friction on the drive wheels of the snow thrower is small, causing the drive wheels to slip and idle and causing the snow thrower to be unable to continue moving forward.

US10214869B1 discloses a snow thrower having an electric drive, a control unit and sensors for monitoring the operating state of the machine, in particular wheel or motor speeds, in order to detect slipping conditions and to control the drive so as to improve traction and manoeuvrability. The detection of slipping is based on drivetrain-related signals and no sensors are arranged on the snow bucket or intake region.

JPS6393910A discloses a self-propelled snow removing machine provided with a plurality of sensors arranged on a front working assembly for detecting the presence and amount of snow in front of the machine, the sensor signals being evaluated by a control unit to adjust the operating speed of the travelling and snow removing mechanisms.

### SUMMARY

The present invention relates to a snow thrower according to claim 1. When the drive wheels slip and idle, a control module controls the snow thrower to stop the drive wheels of the snow thrower from slipping and idling, improving the snow throwing efficiency of the snow thrower, saving the physical strength of a user, and optimizing the operating experience of the user.

The snow thrower includes a body including a working assembly; a handle used for a user to hold and connected to the body; a power supply device for providing the snow thrower with electrical energy; and an electric motor for driving the snow thrower to move. The snow thrower further includes a detection module for determining whether the snow thrower is slipping and idling; and a control module connected to at least the detection module and the electric motor. When the detection module determines that the snow thrower is slipping and idling, the control module controls the snow thrower to stop slipping and idling.

The snow thrower further includes multiple sensors disposed on the body, where the detection module is connected to the multiple sensors and is configured to determine whether the snow thrower is slipping and idling based on the sensing results of the multiple sensors.

The multiple sensors are disposed on a snow bucket of the body, where at least two sensors of the multiple sensors are disposed on an upper side of the snow bucket, at least one sensor of the multiple sensors is disposed on a left side of the snow bucket, and at least one sensor of the multiple sensors is disposed on a right side of the snow bucket. When the snow thrower encountering a large snow pile is slipping and idling, the multiple sensors on the snow bucket can sense that the snow thrower encounters the large snow pile.

In some examples, the at least one sensor on the left side of the snow bucket and the at least one sensor on the right side of the snow bucket are both not lower than a plane where a first axis is located.

In some examples, the multiple sensors are collision sensors, mechanical sensors, Hall sensors, or distance sensors.

In some examples, when at least three sensors among the multiple sensors are triggered, the detection module determines that the snow thrower is slipping and idling.

In some examples, the electric motor includes a first electric motor and a second electric motor, where the first electric motor is connected to a first drive wheel of the snow thrower to drive the first drive wheel, and the second electric motor is connected to a second drive wheel of the snow thrower to drive the second drive wheel.

In some examples, the control module is configured to control the snow thrower to enter a first motion mode to stop the snow thrower from slipping and idling, where within a preset time, the snow thrower in the first motion mode swings left and right to move forward.

In some examples, that the snow thrower swings left and right to move forward includes that based on a preset time interval, the first electric motor drives the first drive wheel to move forward at a first speed and a second speed alternately; where when the first drive wheel is at the first speed, the second electric motor drives the second drive wheel to move forward at the second speed, and when the first drive wheel is at the second speed, the second electric motor drives the second drive wheel to move forward at the first speed; where the preset time interval is less than the preset time, and the first speed is less than the second speed.

In some examples, the control module is configured to control the snow thrower to enter a second motion mode to stop the snow thrower from slipping and idling, where within a preset time, the snow thrower in the second motion mode alternately stops and starts operating.

In some examples, the control module is configured to control the snow thrower to enter a third motion mode to stop the snow thrower from slipping and idling, where within a preset time, the snow thrower in the third motion mode moves backward by a certain distance in a front and rear direction and then moves forward at a third speed, where the third speed is greater than or equal to 0.1 m/s.

In some examples, when the at least three sensors are still triggered in the preset time, the detection module determines that the snow thrower is still slipping and idling, and the control module controls the snow thrower to maintain the first motion mode, where a time during which the snow thrower maintains the first motion mode is equal to the preset time.

In some examples, when the at least three sensors are no longer triggered, the detection module determines that the snow thrower no longer slips and idles, and the control module controls the snow thrower to exit the first motion mode.

In some examples, the control module is configured to control the snow thrower to enter any two of the first motion mode, the second motion mode, and the third motion mode in sequence to stop the snow thrower from slipping and idling.

In some examples, the control module is configured to control the snow thrower to enter the first motion mode, the second motion mode, and the third motion mode in sequence to stop the snow thrower from slipping and idling.

The benefit of the present invention lies in the following: in the snow thrower of the present invention, the detection module can detect whether the snow thrower is slipping and idling, and when the snow thrower is slipping and idling, the control module can stop the snow thrower from slipping and idling, thereby improving the snow throwing efficiency of the snow thrower and preventing the snow thrower from slipping and idling for a long time.

### BRIEF DESCRIPTION OF THE DRAWINGS

FIG. 1 is a perspective view of a snow thrower according to an example.
FIG. 2 is a top view of the snow thrower in FIG. 1.
FIG. 3 is a side view of the snow thrower in FIG. 1.
FIG. 4 is a circuit block diagram of the snow thrower in FIG. 1.
FIG. 5 is a flowchart of a control method for a snow thrower according to an example.
FIG. 6 is a circuit block diagram of a snow thrower according to an example.
FIG. 7 is a circuit block diagram of a snow thrower according to an example.

### DETAILED DESCRIPTION

Before any examples of this invention are explained in detail, it is to be understood that this invention is not limited to its application to the structural details and the arrangement of components set forth in the following description or illustrated in the above drawings.

The terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

The term "and/or" is a kind of association relationship describing the relationship between associated objects, which means that there can be three kinds of relationships. For example, Aand/or B can indicate that A exists alone, A and B exist simultaneously, and B exists alone. In addition, the character "/" generally indicates that the contextual associated objects belong to an "and/or" relationship.

The terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

It is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

Those skilled in the art will understand that a function performed by an assembly may be performed by one assembly, multiple assemblies, one member, or multiple members. Likewise, a function performed by a member may be performed by one member, an assembly, or a combination of members.

The terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

The terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

The term "device", "module" or "unit" may be implemented in the form of hardware or software to achieve specific functions.

The terms "computing", "judging", "controlling", "determining", "recognizing" and the like refer to the operations and processes of a computer system or similar electronic computing device (e.g., controller, processor, etc.).

Currently, when a snow thrower encounters icy and slippery road conditions or large snow piles, the drive wheels of the snow thrower slip and idle due to large forward resistance and small friction on the wheels, making it impossible for the snow thrower to move forward and complete the snow removal task. Based on this, the present invention proposes a snow thrower. When the drive wheels slip and idle, a control module controls the snow thrower to enter a special motion mode, thereby stopping the drive wheels of the snow thrower from slipping and idling, improving the snow throwing efficiency of the snow thrower, saving the physical strength of a user, and optimizing the operating experience of the user.

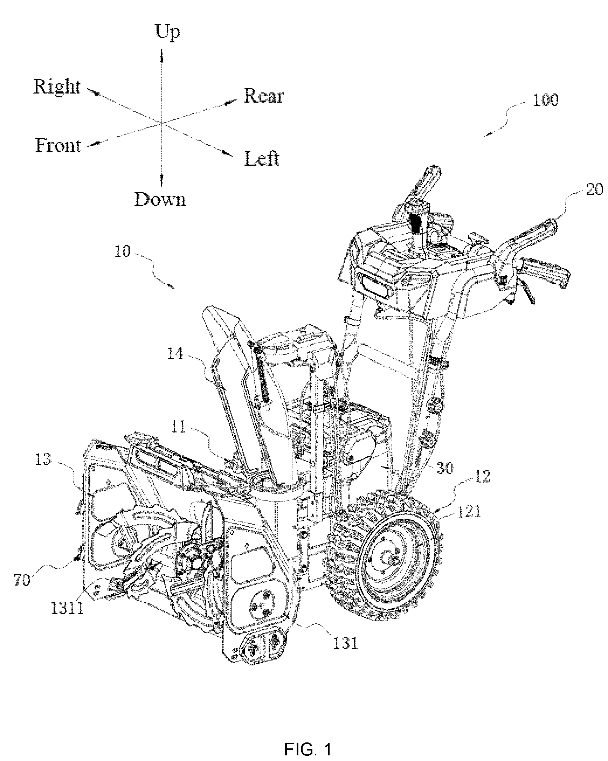

As shown in FIG. 1, a snow thrower 100 in an example is used by the user to remove snow on the ground, for example, snow on a road, snow in a courtyard, or snow in a garden. In this example, a walk-behind snow thrower 100 is used as an example of the snow thrower 100. During working, the user holds the walk-behind snow thrower 100 to push the walk-behind snow thrower 100 behind the walk-behind snow thrower 100 to travel on the ground or follow the walk-behind snow thrower 100 to travel on the ground. In some examples, the snow thrower 100 may be a smart snow thrower 100. The smart snow thrower 100 can move on the ground by itself to remove the snow on the ground without being followed by the user. Alternatively, in some examples, the snow thrower 100 may be a manned snow thrower 100. The user can be supported by the manned snow thrower 100 to travel along with the manned snow thrower 100. It is to be understood that a specific structural form of the snow thrower 100 is not limited by the relationship between the snow thrower 100 and the user.

To facilitate the description of technical solutions of the present invention, the upper side, lower side, front side, rear side, left side, and right side as shown by arrows in FIG. 1 are defined. Of course, the directions in this example are not limited thereto.

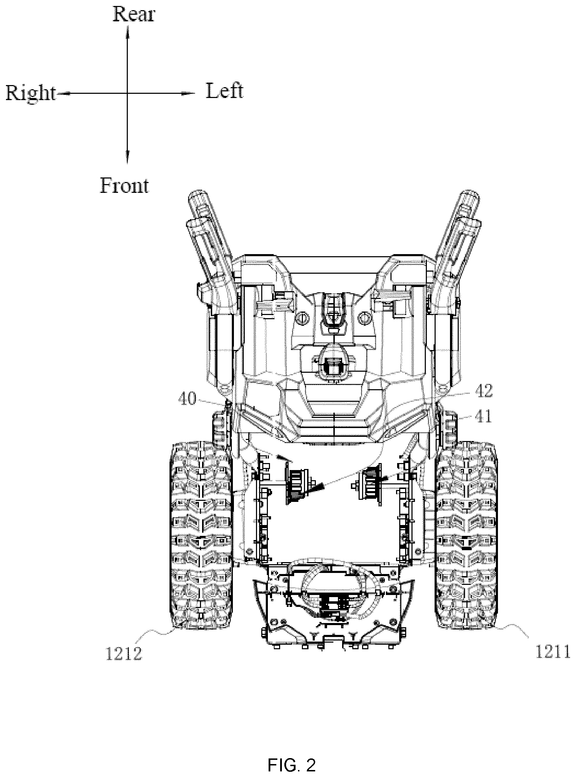

As shown in FIGS. 1 and 2, the snow thrower 100 includes a body 10, a handle 20, a power supply device 30, and an electric motor 40. The body 10 includes multiple working assemblies, and the body 10 includes a main housing 11, a traveling assembly 12, a snow collecting device 13, and a snow throwing device 14. The snow collecting device 13 and the snow throwing device 14 are both working assemblies. The main housing 11 is used as the main frame of the snow thrower 100 and is used for supporting the snow collecting device 13 and the snow throwing device 14. The traveling assembly 12 is used for supporting the main housing 11 to drive the snow thrower 100 to travel on the ground. The snow collecting device 13 is used for stirring the snow on the ground and collecting the snow into the main housing 11. The snow throwing device 14 is used for throwing the snow collected by the snow collecting device 13 to a preset position outside the snow thrower 100. The handle 20 is used for the user to hold and connected to the body 10. In the front and rear direction of the snow thrower 100, the handle 20 is disposed at the rear end of the body 10.

The power supply device 30 is used for providing the snow thrower 100 with electrical energy. In some examples, the power supply device 30 includes at least one battery pack, and the battery pack includes a lithium cell used for storing electrical energy and disposed inside a battery pack housing. The main housing 11 is formed with a battery holder, and the battery pack is at least partially mounted in the battery holder. The battery pack is detachably mounted in the battery holder. In some examples, the power supply device 30 may be a power supply cable or other energy storage device, which is not limited in the present invention.

The traveling assembly 12 includes a drive wheel 121 that drives the snow thrower 100 to travel on the ground, and the drive wheel 121 is driven by the electric motor 40. As shown in FIG. 2, the drive wheel 121 includes a first drive wheel 1211 and a second drive wheel 1212. The first drive wheel 1211 and the second drive wheel 1212 are disposed on two sides of the main housing 11, respectively and support the main housing 11. In the left and right direction of the snow thrower 100, the first drive wheel 1211 and the second drive wheel 1212 are a left drive wheel and a right drive wheel, respectively. This example is specifically described by using the case where the first drive wheel 1211 is the left drive wheel and the second drive wheel 1212 is the right drive wheel as an example.

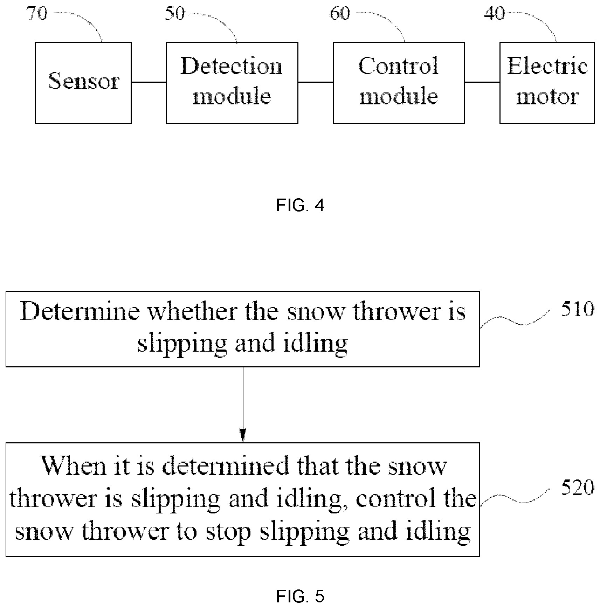

As shown in FIG. 4, the snow thrower further includes a detection module 50 and a control module 60. The detection module 50 is used for determining whether the snow thrower 100 is slipping and idling. The control module 60 is connected to at least the detection module 50 and the electric motor 40. When the detection module 50 determines that the snow thrower 100 is slipping and idling, the control module 60 is used for controlling the snow thrower 100 to stop slipping and idling. As shown in FIGS. 1, 3, and 4, the snow thrower further includes multiple sensors 70 disposed on the body 10, and the detection module 50 is connected to at least the multiple sensors 70 and based on the sensing results of the multiple sensors 70, determines whether the snow thrower 100 is slipping and idling. The multiple sensors 70 are disposed on a snow bucket 131 of the snow collecting device 13. Optionally, the detection module 50 and the control module 60 may be disposed on the electric motor 40, or the detection module 50 and the control module 60 may be disposed on the handle 20. In addition, the detection module 50 and the control module 60 may be disposed at other positions of the snow thrower 100, which is not limited in the present invention. The control module 60 includes a single-chip microcomputer or a microcontroller unit (MCU). In some examples, the single-chip microcomputer is an Advanced reduced instruction set computer (RISC) Machine (ARM) chip, and the MCU is a general-purpose digital signal processor (DSP) chip.

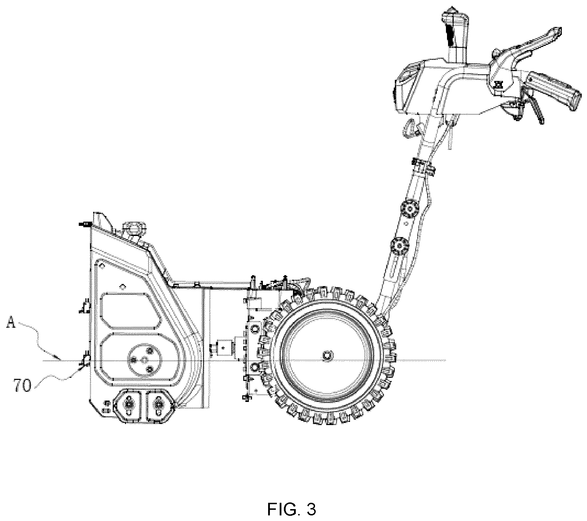

The multiple sensors 70 are disposed on the snow bucket 131 of the body 10, and the number of the multiple sensors 70 is greater than or equal to four. In the up and down direction, at least two sensors 70 are disposed on the upper side of the snow bucket 131. In the left and right direction, at least one sensor 70 is disposed on the left side of the snow bucket 131, and at least one sensor 70 is disposed on the right side of the snow bucket 131. As shown in FIGS. 1 and 3, when the number of the multiple sensors 70 is six, two sensors 70 are disposed on the upper side of the snow bucket 131, two sensors 70 are disposed on the left side of the snow bucket 131, and two sensors 70 are disposed on the right side of the snow bucket 131. The sensors 70 are disposed on the upper side, left side, and right side of the snow bucket 131 so that when the snow thrower 100 encountering a large snow pile is slipping and idling, the multiple sensors 70 on the snow bucket 131 can sense that the snow thrower 100 encounters the large snow pile. The sensors 70 are collision sensors, mechanical sensors, Hall sensors, or distance sensors. In addition, the sensors 70 may be other sensors for sensing external objects or distance, which is not limited in the present invention. Optionally, the multiple sensors 70 on the left side and the right side of the snow bucket 131 are not lower than a plane where a first axis is located. As shown in FIG. 1, an Auger shaft 1311 is disposed in the snow bucket 131, and the first axis is the axis of the Auger shaft 1311. As shown in FIG. 3, the plane where the Auger shaft 1311 is located is plane A, and the heights at which the multiple sensors 70 are disposed on the left and right sides of the snow bucket 131 are not lower than the height of plane A. The heights at which the multiple sensors 70 are disposed on the left and right sides are not lower than the height of plane A so that the multiple sensors 70 can sense the snow pile only when the height of the snow pile reaches at least the height of plane A.

In some examples, when at least three sensors 70 among the multiple sensors 70 are triggered, the signals indicating that the at least three sensors 70 are triggered are transmitted to the detection module 50, and the detection module 50 determines that the snow thrower 100 is slipping and idling. Then, according to the determination result of the detection module 50, the control module 60 controls the snow thrower 100 to stop slipping and idling. The at least three sensors 70 are triggered, that is, at least one sensor 70 is triggered on each of the upper side, the left side, and the right side of the snow bucket 131. Optionally, the control module 60 controls the snow thrower 100 to enter a first motion mode. Specifically, within a preset time, the snow thrower 100 in the first motion mode swings left and right to move forward. The preset time is set according to the empirical value. Specifically, when the at least three sensors 70 are triggered, that is, the at least three sensors 70 sense snow, it means that the sensors 70 on the left and right sides of the snow bucket 131 sense snow, and at least one sensor 70 on the upper side of the snow bucket 131 senses snow, thereby determining that the snow thrower 100 encounters a large snow pile and is slipping and idling. If the snow thrower 100 still moves normally, the snow thrower 100 keeps slipping and idling.

In some examples, as shown in FIG. 2, the electric motor 40 includes a first electric motor 41 and a second electric motor 42, where the first electric motor 41 is connected to the first drive wheel 1211 to drive the first drive wheel 1211 to operate, and the second electric motor 42 is connected to the second drive wheel 1212 to drive the second drive wheel 1212 to operate. In this manner, when the control module 60 controls the snow thrower 100 to enter the first motion mode, based on a preset time interval, the first electric motor 41 drives the first drive wheel 1211 to move forward at a first speed and a second speed alternately; when the first drive wheel 1211 is at the first speed, the second electric motor 42 drives the second drive wheel 1212 to move forward at the second speed; and when the first drive wheel 1211 is at the second speed, the second electric motor 42 drives the second drive wheel 1212 to move forward at the first speed. The preset time interval is less than the preset time, and the first speed is less than the second speed.

In some examples, if the at least three sensors 70 are still triggered in the preset time, the detection module 50 determines that the snow thrower 100 is still slipping and idling if the snow thrower 100 moves normally, that is, the snow thrower 100 still encounters the large snow pile, and then the control module 60 controls the snow thrower 100 to continue maintaining the first motion mode. The time during which the snow thrower 100 maintains the first motion mode is equal to the preset time. Therefore, when the at least three sensors 70 are continuously triggered, the control module 60 controls the snow thrower 100 to repeatedly enter the first motion mode until the at least three sensors 70 are no longer triggered. The detection module 50 then determines that the large snow pile is removed by the snow thrower 100 and the snow thrower 100 does not continue to slip and idle during normal movement, and the control module 60 controls the snow thrower 100 to exit the first motion mode and resume normal movement.

In some examples, the preset time is set to 5s and the preset time interval is set to 1s. Then, in the first motion mode, at the 1st second, the first electric motor 41 may drive the first drive wheel 1211 to move forward at the first speed, and the second electric motor 42 drives the second drive wheel 1212 to move forward at the second speed. Since the second speed is greater than the first speed, the snow thrower 100 swings to the left to move forward. At the 2nd second, the first electric motor 41 drives the first drive wheel 1211 to move forward at the second speed, and the second electric motor 42 drives the second drive wheel 1212 to move forward at the first speed. At this time, the snow thrower 100 swings to the right to move forward. The preceding is repeated until the preset time is over. In the preset time, based on the determination result of the detection module 50, the control module 60 controls the snow thrower 100 to continue entering the first motion mode or to exit the first motion mode and resume normal movement. Optionally, to ensure a small extent to which the snow thrower 100 swings left and right and to enable the snow thrower 100 to swing forward repeatedly without deviating from the large snow pile, the second speed is slightly greater than the first speed. Therefore, the snow thrower 100 in the first motion mode repeatedly swings left and right to move forward and collects snow on the sides of the large snow pile multiple times so that the snow on the sides of the large snow pile gradually decreases until the large snow pile is removed by the snow thrower, and the snow thrower 100 no longer slips and idles in place when encountering the large snow pile.

In some examples, when at least three sensors 70 among the multiple sensors 70 are triggered, the signals indicating that the at least three sensors 70 are triggered are transmitted to the detection module 50, and the detection module 50 determines that the snow thrower 100 is slipping and idling. Then, the control module 60 controls the snow thrower 100 to stop slipping and idling. The control module 60 may control the snow thrower 100 to enter a second motion mode. With a preset time, the snow thrower 100 in the second motion mode alternately stops and starts operating. The speed at which the snow thrower 100 starts operating is relatively low. The preset time of the second motion mode is the same as the preset time of the first motion mode. Specifically, when the control module 60 controls the snow thrower 100 to enter the second motion mode, the electric motor 40 controls the snow thrower 100 to stop operating, that is, the first electric motor 41 controls the first drive wheel 1211 to stop operating, and at the same time, the second electric motor 42 controls the second drive wheel 1212 to stop operating. After the snow thrower 100 stops operating, the control module 60 controls the snow thrower 100 to start operating again. In this case, the first electric motor 41 drives the first drive wheel 1211 to operate at a low speed, and at the same time, the second electric motor 42 controls the second drive wheel 1212 to operate at a low speed the same as the speed of the first drive wheel 1211. After the snow thrower 100 operates at a low speed for a certain period, the control module 60 controls the snow thrower 100 to stop operating again. The time for the snow thrower 100 to operate at a low speed is set according to the empirical value. Therefore, the snow thrower 100 alternately stops and starts operating more than 100 times within the preset time.

In some examples, similar to the case where the control module 60 controls the snow thrower 100 to enter the first motion mode, in the preset time, if the at least three sensors 70 are still triggered, the control module 60 controls the snow thrower 100 to continue maintaining the second motion mode, and the time during which the snow thrower 100 maintains the second motion mode is equal to the preset time. When the at least three sensors 70 are no longer triggered, that is, when the snow thrower 100 no longer slips and idles during normal movement, the control module 60 controls the snow thrower 100 to exit the second motion mode and resume normal movement. The snow thrower 100 is controlled to alternately stop operating and start operating at a low speed multiple times within the time during which the at least three sensors 70 are triggered so that the snow thrower 100 repeatedly removes the large snow pile in small amounts multiple times, thereby preventing the snow thrower 100 from slipping and idling in place. In addition, when the snow thrower 100 encounters a large snow pile, the load of the snow thrower 100 is relatively large, and the load of the Auger of the snow thrower 100 is relatively large, causing that the Auger of the snow thrower 100 is easily in a locked rotor condition and stops. The snow thrower 100 is controlled to alternately stop operating and start operating at a low speed multiple times so that the load of the Auger of the snow thrower 100 changes. After the snow thrower 100 stops operating, the load of the Auger of the snow thrower 100 becomes smaller. The snow thrower 100 is controlled to alternately start and stop operating so that the load of the Auger changes, thereby solving the problem that the Auger is easily in a locked rotor condition and stops.

In some examples, when at least three sensors 70 among the multiple sensors 70 are triggered, the signals indicating that the at least three sensors 70 are triggered are transmitted to the detection module 50, and the detection module 50 determines that the snow thrower 100 is slipping and idling. Then, the control module 60 controls the snow thrower 100 to stop slipping and idling. The control module 60 may control the snow thrower 100 to enter a third motion mode. With a preset time, the snow thrower 100 in the third motion mode moves backward by a certain distance in the front and rear direction and then moves forward at a third speed. The third speed is greater than or equal to 0.1 m/s, and the third speed is a faster operating speed. The preset time of the third motion mode is the same as the preset time of the first motion mode. Specifically, when the control module 60 controls the snow thrower 100 to enter the third motion mode, within the preset time, the electric motor 40 controls the snow thrower 100 to move backward, and after the snow thrower 100 moves backward by a preset distance, the electric motor 40 controls the snow thrower 100 to move forward at the third speed until the snow thrower 100 collides with the large snow pile again. Then, the electric motor 40 controls the snow thrower 100 to move backward to the preset distance again and move forward at the third speed until the snow thrower 100 encounters the large snow pile, that is, the snow thrower 100 accelerates and collides with the large snow pile. The preceding is repeated multiple times until the preset time is over. The preset distance is set according to the empirical value.

In some examples, similar to the cases where the control module 60 controls the snow thrower 100 to enter the first motion mode and the second motion mode, in the preset time, if the at least three sensors 70 are still triggered, the control module 60 controls the snow thrower 100 to continue maintaining the third motion mode, and the time during which the snow thrower 100 maintains the third motion mode is equal to the preset time. When the at least three sensors 70 are no longer triggered and the snow thrower 100 no longer slips and idles during normal movement, the control module 60 controls the snow thrower 100 to exit the third motion mode and resume normal movement. The snow thrower 100 is controlled to repeatedly move backward and accelerate to collide with the large snow pile multiple times within the time during which the at least three sensors 70 are triggered so that the snow thrower 100 repeatedly collides with the large snow pile to remove the large snow pile, thereby preventing the snow thrower 100 from slipping and idling in place.

In some examples, when at least three sensors 70 among the multiple sensors 70 are triggered, the detection module 50 determines that the snow thrower 100 is slipping and idling, and the control module 60 may control the snow thrower 100 to enter the first motion mode. If the at least three sensors 70 are still triggered in the preset time, the control module 60 may control the snow thrower 100 to enter the second motion mode or the third motion mode. The control module 60 may control the snow thrower 100 to enter the second motion mode or the third motion mode first. The sequence in which the snow thrower 100 enters any two of the three motion modes is not limited in the present invention. In this manner, the control module 60 may control the snow thrower 100 to repeatedly enter any two of the three motion modes until the snow thrower 100 no longer slips and idles during normal movement.

In some examples, when at least three sensors 70 among the multiple sensors 70 are triggered, the detection module 50 determines that the snow thrower 100 is slipping and idling, and the control module 60 may control the snow thrower 100 to enter the first motion mode. If the at least three sensors 70 are still triggered in the preset time, the control module 60 may control the snow thrower 100 to enter the second motion mode. If the at least three sensors 70 are still triggered after the second motion mode, the control module 60 may control the snow thrower 100 to enter the third motion mode. In this manner, the control module 60 may control the snow thrower 100 to repeatedly enter any one of the three motion modes in sequence until the snow thrower 100 no longer slips and idles. In addition, the sequence in which the snow thrower 100 enters the three motion modes is not limited in the present invention.

In some examples, FIG. 5 shows a flowchart of a control method applicable to the preceding snow thrower. The control method is performed by the snow thrower 100 in the example of the present invention. The control method specifically includes the steps below.

In step 510, whether the snow thrower is slipping and idling is determined.

Specifically, the detection module 50 may be used for determining whether the snow thrower 100 is slipping and idling. The detection module 50 is connected to multiple sensors 70, and the detection module 50 acquires the sensing results of the multiple sensors 70. The sensing results of the multiple sensors 70 include whether the sensors 70 are triggered or not and the number of the multiple sensors 70 that are triggered. When the sensing results of the multiple sensors 70 are that at least three sensors 70 are triggered, the detection module 50 may determine that the state of the snow thrower 100 is slipping and idling. When the sensing results of the multiple sensors 70 are that less than three sensors 70 are triggered, the detection module 50 may determine that the state of the snow thrower 100 is normal operation. The specific method for determining the state of the snow thrower 100 is described above, and the details are not repeated here.

In step 520, when it is determined that the snow thrower is slipping and idling, the snow thrower is controlled to stop slipping and idling.

Specifically, in step 510, when the detection module 50 determines that the state of the snow thrower 100 is slipping and idling, the control module 60 controls the snow thrower 100 to enter the first motion mode, and/or the second motion mode, and/or the third motion mode. The specific process in which the snow thrower 100 enters the preceding motion modes is described above, and the details are not repeated here. When the state of the snow thrower 100 is normal operation, the snow thrower 100 continues maintaining normal operation.

At least four sensors 70 are provided on the snow bucket 131 of the snow thrower 100 so that whether the snow thrower 100 is slipping and idling can be determined according to the sensing results of the sensors 70, the snow thrower 100 can be controlled in time to enter the motion mode, and through multiple motion modes, the snow thrower 100 can be prevented from slipping and idling in place, thereby improving the snow throwing efficiency of the snow thrower 100. In addition, by providing collision sensors or mechanical switch sensors, costs are saved, and accurate sensing can be performed no matter when the snow thrower 100 operates outdoors, indoors, during the day, at night, or in other environments.

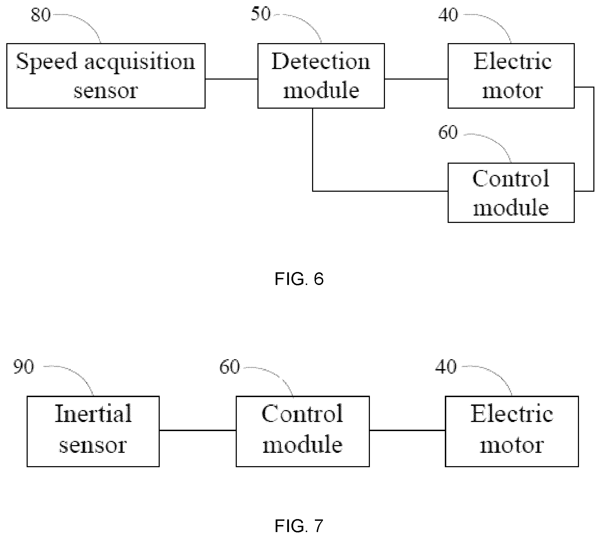

In some examples, a speed acquisition sensor 80 is disposed on the body of the snow thrower 100 and is used for acquiring the movement speed of the snow thrower 100. The speed acquisition sensor 80 may be a visual sensor, an ultrasonic speed sensor, or the like. When the snow thrower 100 is moving normally, the rotational speed of the electric motor 40 is equal to the movement speed of the snow thrower 100. When the snow thrower 100 is slipping and idling, the movement speed of the snow thrower 100 is less than the real-time rotational speed of the electric motor 40. Therefore, by comparing the movement speed of the snow thrower 100 with the real-time rotational speed of the electric motor 40, it can be determined whether the snow thrower 100 is slipping and idling. Optionally, as shown in FIG. 6, the detection module 50 is connected to the speed acquisition sensor 80, the electric motor 40, and the control module 60 and is used for acquiring the movement speed of the snow thrower 100 acquired by the speed acquisition sensor 80 and the real-time rotational speed of the electric motor 40 and comparing the movement speed of the snow thrower 100 with the real-time rotational speed of the electric motor 40. When the difference between the movement speed of the snow thrower 100 and the real-time rotational speed of the electric motor 40 is greater than a first preset threshold, it can be determined that the snow thrower 100 is slipping and idling, and the signal indicating that the snow thrower 100 is slipping and idling is transmitted to the control module 60. The control module 60 is connected to the electric motor 40, and the control module 60 controls the snow thrower 100 to enter three motion modes. The first preset threshold is determined according to the empirical value.

In some examples, an inertial sensor 90 is disposed on the body of the snow thrower 100 and is used for acquiring an attitude signal of the snow thrower 100. As shown in FIG. 7, the inertial sensor 90 is connected to the control module 60, the control module 60 is connected to the electric motor 40, and the control module 60 receives the attitude signal of the snow thrower 100 inputted from the inertial sensor 90. When the snow thrower 100 is slipping and idling, the snow thrower 100 is slipping and idling in place or the speed of the snow thrower 100 is significantly reduced, and the attitude of the snow thrower 100 changes. According to changes in the posture of the snow thrower 100 detected by the inertial sensor 90, the control module 60 controls the snow thrower 100 to enter three motion modes.

In some examples, multiple buttons are further disposed on the snow thrower 100 and represent the first motion mode, the second motion mode, and the third motion mode, respectively. When the snow thrower 100 is slipping and idling, if the sensors 70 do not sense the case in time, the detection module 50 cannot determine the state of the snow thrower 100, and the control module 60 cannot automatically control the snow thrower 100 to enter the motion mode. Alternatively, when the sensors 70 are not mounted on the snow thrower 100, by pressing the button, the user may manually control the snow thrower 100 to enter the motion mode to solve the problem of the snow thrower 100 slipping and idling. Optionally, the buttons may be provided on the handle 20, thereby facilitating user operation. In addition, the buttons may be provided at other positions on the snow thrower 100, which is not limited in the present invention.

The basic principles, main features, and advantages of this invention are shown and described above. It is to be understood by those skilled in the art that the aforementioned examples do not limit the present invention, and technical solutions obtained through equivalent substitutions or equivalent transformations may fall within the scope of the present invention as defined in the appended claims.

## Claims

1. A snow thrower (100), comprising:
a body (10) comprising a working assembly;
a handle (20) used for a user to hold and connected to the body;
a power supply device (30) for providing electrical energy to the snow thrower;
an electric motor (40) for driving the snow thrower to move;
a detection module (50) for determining whether the snow thrower is slipping and idling; and
a control module (60) connected to at least the detection module and the electric motor; and
a plurality of sensors (70) disposed on the body, wherein the detection module is connected to the plurality of sensors (70) and is configured to determine whether the snow thrower is slipping and idling based on the sensing results of the multiple sensors (70);
wherein the control module (60) is configured to control the snow thrower to stop slipping and idling when the detection module (50) determines that the snow thrower is slipping and idling;
**characterized in that**
the plurality of sensors (70) are disposed on a snow bucket of the body, at least two sensors of the plurality of sensors are disposed on an upper side of the snow bucket, at least one sensor of the plurality of sensors is disposed on a left side of the snow bucket, and at least one sensor of the plurality of sensors is disposed on a right side of the snow bucket.

2. The snow thrower of claim 1, wherein when at least three sensors among the plurality of sensors (70) are triggered, the detection module (50) determines that the snow thrower is slipping and idling.

3. The snow thrower of claim 1, wherein the electric motor comprises a first electric motor (41) and a second electric motor (42), the first electric motor is connected to a first drive wheel (1211) of the snow thrower to drive the first drive wheel, and the second electric motor is connected to a second drive wheel (1212) of the snow thrower to drive the second drive wheel.

4. The snow thrower of claim 1, wherein the at least one sensor on the left side of the snow bucket and the at least one sensor on the right side of the snow bucket are both not lower than a plane where an axis of an auger shaft (1311) is located.

5. The snow thrower of claim 1, wherein the plurality of sensors (70) are collision sensors, mechanical sensors, Hall sensors, or distance sensors.

## Patentansprüche

1. Eine Schneefräse (100), umfassend:
einen Körper (10), der eine Arbeitseinheit umfasst;
einen Griff (20), der von einem Benutzer gehalten wird und mit dem Körper verbunden ist;
eine Stromversorgungsvorrichtung (30) zur Bereitstellung elektrischer Energie für die Schneefräse;
einen Elektromotor (40) zum Antreiben der Schneefräse zur Bewegung;
ein Detektionsmodul (50) zur Bestimmung, ob die Schneefräse schlupft und im Leerlauf läuft; und
ein Steuermodul (60), das zumindest mit dem Detektionsmodul und dem Elektromotor verbunden ist; und
eine Mehrzahl von Sensoren (70), die am Körper angeordnet sind, wobei das Detektionsmodul mit der Mehrzahl von Sensoren (70) verbunden ist und dazu ausgebildet ist, auf Grundlage der Erfassungsergebnisse der mehreren Sensoren (70) zu bestimmen, ob die Schneefräse schlupft und im Leerlauf läuft;
wobei das Steuermodul (60) dazu ausgebildet ist, die Schneefräse so zu steuern, dass das Schlupfen und der Leerlauf gestoppt werden, wenn das Detektionsmodul (50) bestimmt, dass die Schneefräse schlupft und im Leerlauf läuft;
**dadurch gekennzeichnet, dass**
die Mehrzahl von Sensoren (70) an einem Schneeeinlassgehäuse des Körpers angeordnet ist, wenigstens zwei Sensoren der Mehrzahl von Sensoren an einer Oberseite des Schneeeinlassgehäuses angeordnet sind, wenigstens ein Sensor der Mehrzahl von Sensoren an einer linken Seite des Schneeeinlassgehäuses angeordnet ist, und wenigstens ein Sensor der Mehrzahl von Sensoren an einer rechten Seite des Schneeeinlassgehäuses angeordnet ist.

2. Die Schneefräse nach Anspruch 1, wobei, wenn wenigstens drei Sensoren aus der Mehrzahl von Sensoren (70) ausgelöst werden, das Detektionsmodul (50) bestimmt, dass die Schneefräse schlupft und im Leerlauf läuft.

3. Die Schneefräse nach Anspruch 1, wobei der Elektromotor einen ersten Elektromotor (41) und einen zweiten Elektromotor (42) umfasst, wobei der erste Elektromotor mit einem ersten Antriebsrad (1211) der Schneefräse verbunden ist, um das erste Antriebsrad anzutreiben, und der zweite Elektromotor mit einem zweiten Antriebsrad (1212) der Schneefräse verbunden ist, um das zweite Antriebsrad anzutreiben.

4. Die Schneefräse nach Anspruch 1, wobei der wenigstens eine Sensor an der linken Seite des Schneeeinlassgehäuses und der wenigstens eine Sensor an der rechten Seite des Schneeeinlassgehäuses beide nicht unterhalb einer Ebene angeordnet sind, in der eine Achse einer Schneckenwelle (1311) angeordnet ist.

5. Die Schneefräse nach Anspruch 1, wobei die Mehrzahl von Sensoren (70) Kollisionssensoren, mechanische Sensoren, Hall-Sensoren oder Abstandssensoren sind.

## Revendications

1. Une souffleuse à neige (100), comprenant :
un corps (10) comprenant un ensemble de travail ;
une poignée (20) utilisée pour être tenue par un utilisateur et reliée au corps ;
un dispositif d'alimentation (30) destiné à fournir de l'énergie électrique à la souffleuse à neige ;
un moteur électrique (40) destiné à entraîner la souffleuse à neige en mouvement ;
un module de détection (50) destiné à déterminer si la souffleuse à neige patine et tourne à vide ; et
un module de commande (60) relié au moins au module de détection et au moteur électrique ; et
une pluralité de capteurs (70) disposés sur le corps, dans lequel le module de détection est relié à la pluralité de capteurs (70) et est configuré pour déterminer si la souffleuse à neige patine et tourne à vide sur la base des résultats de détection des multiples capteurs (70) ;
dans lequel le module de commande (60) est configuré pour commander la souffleuse à neige afin d'arrêter le patinage et le fonctionnement à vide lorsque le module de détection (50) détermine que la souffleuse à neige patine et tourne à vide ;
**caractérisé en ce que**
la pluralité de capteurs (70) est disposée sur un carter à neige du corps, au moins deux capteurs parmi la pluralité de capteurs sont disposés sur un côté supérieur du carter à neige, au moins un capteur parmi la pluralité de capteurs est disposé sur un côté gauche du carter à neige, et au moins un capteur parmi la pluralité de capteurs est disposé sur un côté droit du carter à neige.

2. La souffleuse à neige selon la revendication 1, dans laquelle lorsqu'au moins trois capteurs parmi la pluralité de capteurs (70) sont déclenchés, le module de détection (50) détermine que la souffleuse à neige patine et tourne à vide.

3. La souffleuse à neige selon la revendication 1, dans laquelle le moteur électrique comprend un premier moteur électrique (41) et un deuxième moteur électrique (42), le premier moteur électrique étant relié à une première roue motrice (1211) de la souffleuse à neige pour entraîner la première roue motrice, et le deuxième moteur électrique étant relié à une deuxième roue motrice (1212) de la souffleuse à neige pour entraîner la deuxième roue motrice.

4. La souffleuse à neige selon la revendication 1, dans laquelle ledit au moins un capteur sur le côté gauche du carter à neige et ledit au moins un capteur sur le côté droit du carter à neige ne sont pas situés au-dessous d'un plan dans lequel est situé un axe d'un arbre de tarière (1311).

5. La souffleuse à neige selon la revendication 1, dans laquelle la pluralité de capteurs (70) sont des capteurs de collision, des capteurs mécaniques, des capteurs Hall ou des capteurs de distance.
